# EUROPÄISCHE PATENTSCHRIFT

(11) **EP 2 407 332 B1**
(45) Veröffentlichungstag und Bekanntmachung des Hinweises auf die Patenterteilung: **09.10.2013**
(21) Anmeldenummer: 11005616.5
(22) Anmeldetag: 08.07.2011
(51) Int. Cl.: B60J 7/12

(54) **Faltverdeck für einen Personenkraftwagen**
Collapsible roof for a passenger vehicle
Toit escamotable pour un véhicule de transport de passagers

(30) Priorität: 13.07.2010 DE 102010027007
(43) Veröffentlichungstag der Anmeldung: 18.01.2012
(73) Patentinhaber: Magna Car Top Systems GmbH, 74321 Bietigheim-Bissingen (DE)
(72) Erfinder: Herz, Konrad, Dipl.-Ing., 71287 Weissach (DE)
(74) Vertreter: Völger, Silke Beatrix

(56) Entgegenhaltungen:
- EP-A2- 2 228 247
- DE-U1- 20 005 180
- US-A1- 2010 096 879

## Beschreibung

Die Erfindung bezieht sich auf ein Faltverdeck für einen Personenkraftwagen, das mit einer eine Dachkappe aufweisenden Verdeckstruktur versehen ist, nach dem Oberbegriff des Patentanspruchs 1.

Es ist ein Hybridkopfstück für ein Cabrioletverdeck eines Personenkraftwagens bekannt, DE 197 07 019 B4, das nach Art einer Dachkappe ausgeführt ist und sich benachbart eines oberen Querträgres eines Windschutzscheibenrahmens erstreckt. Eine erste Ausführung des Hybridkopfstücks umfasst ein ovales Rohrstück, das mit Seitenschienen eines Verdeckgestänges verbunden ist und quer zur Fahrzeuglängsrichtung verläuft. Das Rohrstück wird von einem oberen Kunststoffteil und einem unteren Kunststoffteil umgeben, wobei beide Kunststoffteile in einem rückwärtigen Bereich an Flanschen zusammengesetzt sind, an denen ein energieabsorbierendes Polster vorgesehen ist. Eine zweite Ausführung umfasst ein vergleichbares Rohrstück, das in einen Schaumstoffkörper eingebettet ist, der einen energieabsorbierenden Abschnitt aufweist.

Gemäß der WO 2005/056347 A1 ist ein Faltverdeck für ein Kraftfahrzeug benachbart einem Windschutzscheibenrahmen mit einer Dachspitze versehen, die als Druckgussstruktur ausgeführt ist. Die Dachspitze weist einen in den Insassenraum ragenden Abschnitt auf. In die Druckgussstruktur eingearbeitet sind Ausnehmungen, die mittels Abdeckungen verkleidet sind. Die Abdeckungen, bestehend aus relativ dünnwandigen Elementen aus Kunststoff oder Metall, sind bei einem eventuellen Kopfaufprall von Insassen deformierbar.

Aus der EP 2 228 247 A2 ist ein Faltverdeck für ein Fahrzeug mit einer Dachkappe bekannt. Zwischen Dachkappe und einer Wand eines oberen Querträgers des Windschutzscheibenrahmens ist ein Dichtkörper wirksam, der unter Vermittlung einer Tragleiste an dieser Dachkappe befestigt ist. Die Tragleiste ragt mit einem Haltesteg in einen U-förmigen Halteabschnitt des Dichtkörpers hinein. Die Tragleiste weist weiterhin einen Schenkel auf, der horizontal ausgerichtet ist und an einer Rippenvorrichtung der Dachkappe anliegt.

Aufgabe der Erfindung ist es, eine Dachkappe für ein Faltverdeck eines Personenkraftwagens zu konzipieren, die sich durch gezielte Festigkeit auszeichnet und mit einer Schutzeinrichtung versehen ist, die bei hohen oder unfallträchtigen Fahrzeugverzögerungen etwaige Verletzungsrisiken von Insassen im Fahrgastraum des Personenwagens zumindest reduziert.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die aus formsteifem Werkstoff wie Leichtmetallguss, Kunststoff oder dgl. bestehende Dachkappe einer Verdeckstruktur zur Festigkeitsoptimierung mit örtlichen Querschnittserweiterungen in Form von Rippen versehen ist, die in Richtung Fahrgastraum ausgerichtet sind. Diese Rippen der Dachkappe, die mit relativ geringem Abstand zu Köpfen von Insassen im Fahrgasraum verläuft, werden von einer hochwirksamen Schutzeinrichtung abgedeckt. Mit der Schutzeinrichtung, die z. B. aus einem Kunststoff mit definierten, energieabsorbierenden Eigenschaften besteht, wird die Verletzungsschwere der Insassen infolge eines durch hohe Fahrzeugverzögerung bedingten Kopfaufschlags vermindert. Diese Schutzeinrichtung wirkt dadurch vorbildlich, dass sie sich über eine wesentliche Länge der Dachkappe, und zwar in Fahrzeuglängsrichtung und Fahrzeugquerrichtung, erstreckt. Musterhaft ist auch, dass die Schutzeinrichtung auf der der Innenseite der Dachkappe zugewandten Seite mit Ausnehmungen für die Rippen versehen ist, wobei zumindest eine der Ausnehmungen der Schutzeinrichtung zur Aufnahme eines Kabels, Leitungsstrangs oder dgl. ausgebildet ist. Schließlich ist auch noch hervorzuheben, dass die Halterung der Schutzeinrichtung im vorderen Bereich und im hinteren Bereich sich durch Einfachheit und Montagefreundlichkeit auszeichnet.

In der Zeichnung wird ein Ausführungsbeispiel der Erfindung gezeigt, das nachstehend näher erläutert wird.

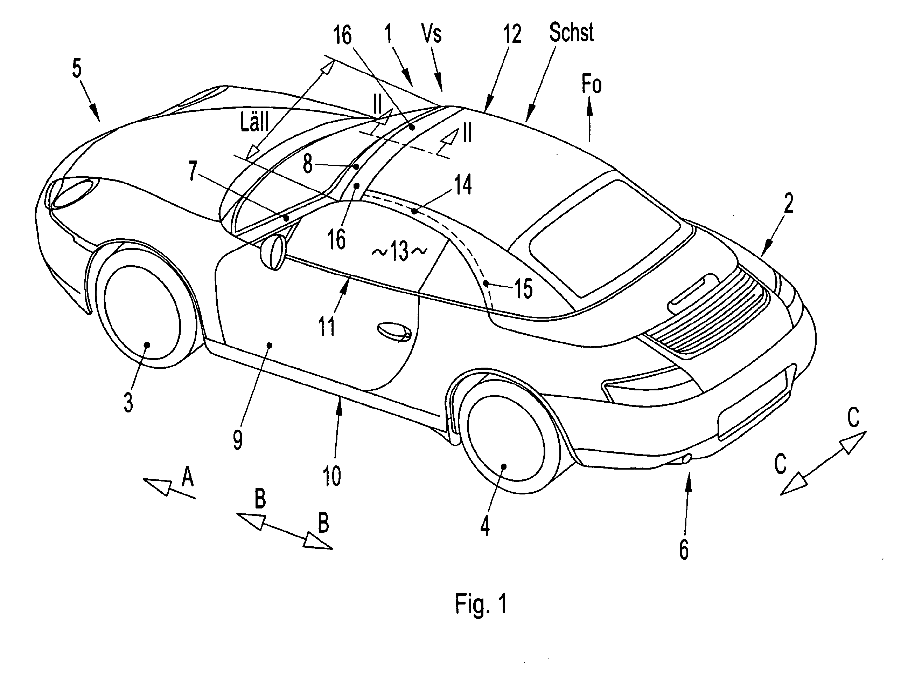

Es zeigen
Fig. 1 eine Schrägansicht auf einen Personenkraftwagen mit einem Faltverdeck von hinten links oben,

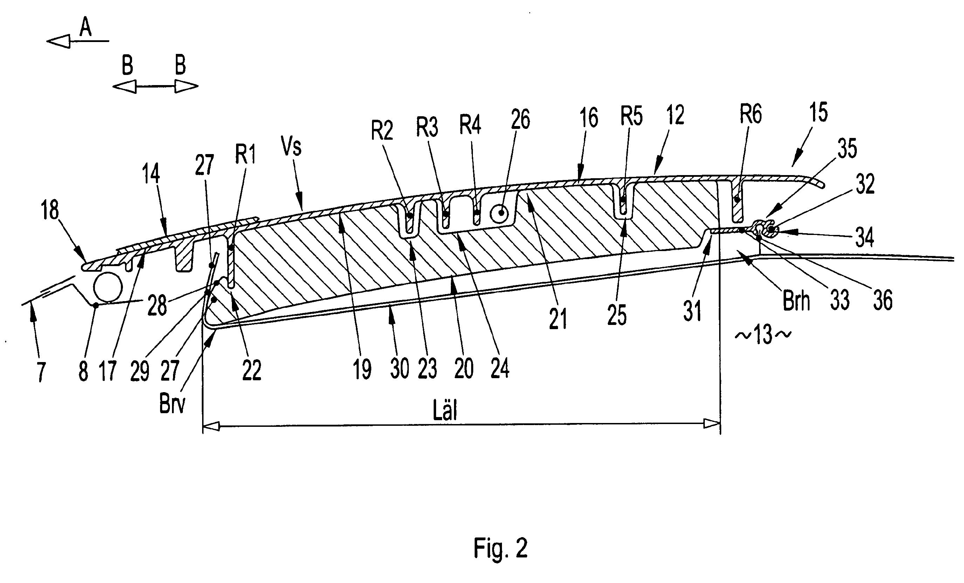

Fig. 2 einen Schnitt nach der Linie II-II der Fig. 1 in größerem Maßstab.

Ein Personenkraftwagen 1 weist einen Aufbau 2 auf, der von Rädern 3 und 4 getragen wird. Der einen Bug 5 und ein Heck 6 besitzende Aufbau 2 umfasst einen Windschutzscheibenrahmen 7 mit einem oberen Querträger 8 sowie Türen 9. Ein Grundkörper 10 des Aufbaus 2 wird von einer etwa horizontal verlaufenden Gürtellinie 11 zur Fahrzeugoberseite Fo hin begrenzt. Oberhalb der Gürtellinie 11 überwölbt ein Faltverdeck 12 einen Fahrgastraum 13, welches Faltverdeck 1 von einer Schließstellung Schst in eine Offenstellung -nicht dargestellt- verstellbar ist und vice versa.

Das Faltverdeck 12 ist als eine Verdeckstruktur Vs ausgebildet und setzt sich aus einem Verdeckbezug 14 und einem Verdeckgestänge 15 zusammen. Das Verdeckgestänge 15 ist benachbart dem oberen Querträger 8 des Windschutzscheibenrahmens 7 mit einer Dachkappe 16 versehen, die mit einem sich entgegen der Fahrtrichtung A erstreckenden flächigen Wandabschnitt 17 den Verdeckbezug 14 trägt und mit einer Spitzenzone 18 an den oberen Querträger 8 anschließt. Die Dachkappe 16 besteht z. B. aus formsteifem Werkstoff wie Leichtmetallguss, hochfestem Kunststoff oder dgl. und ist zur Festigkeitserhöhung mit aufrechten Rippen R1, R2, R3, R4, R5 und R6 ausgestattet, die von einer Innenseite 19 des Wandabschnitts 17 in Richtung Fahrgastraum 13 zeigen.

Die Rippen R1, R2, R3, R4, R5 und R6 sind durch eine Schutzeinrichtung 20 abgedeckt, wodurch die Verletzungsgefahr von Insassen -nicht gezeigt- im Fahrgastraum 13 bei übermäßiger Verzögerung des Personenkraftwagens 1 deutlich gemindert wird. Die als Kunststoffschaumteil mit definierten stoßenergieabsorbierenden Eigenschaften ausgebildete plattenartige, vorzugsweise einteilige Schutzeinrichtung 20 ist im Ausführungsbeispiel aus Polyurethan mit einem Raumgewicht von ca. 100gr/liter hergestellt, und sie erstreckt sich über wesentliche Längen Läl und Läll der Dachkappe 16, d. h. in Fahrzeuglängsrichtung B-B und in Fahrzeugquerrichtung C-C. Auf der der Innenseite 19 der Dachkappe 16 zugekehrten Seite 21 der Schutzeinrichtung 20 sind Ausnehmungen 22, 23, 24 und 25 vorgesehen, wobei sich die Seite 21 der Schutzeinrichtung 20 an der Innenseite 19 des Wandabschnitts 17 abstützt.

Die Ausnehmung 24 für die Rippen R3 und R4 ist zur Aufnahme eines Kabels 26, Leitungsstrangs oder dgl. ausgebildet, und die ―in Fahrtrichtung A betrachtet- in einem vorderen Bereich Brv liegende Ausnehmung 21 der Schutzeinrichtung 20 umgibt die Rippe R1 zumindest abschnittsweise form- und kraftschlüssig, will heißen die Schutzeinrichtung 20 ist an der Rippe R1 mittels der Ausnehmung 21 festgelegt.

Benachbart der Ausnehmung 21 ist die Schutzeinrichtung 20 mit einer in Fahrtrichtung A ausgerichteten konvexen Erweiterung 27 versehen, die eine ballige Kontur 28 besitzt. Um diese Kontur 28 ist eine Abwinkelung 29 einer Innenverkleidung 30 herumgeführt. An einem in Fahrtrichtung A gesehen hinteren Bereich Brh der Schutzeinrichtung 20, der von der Rippe R6 begrenzt wird, ist eine Halteleiste 31 angebracht, die bspw. mit einem Seil 32 in Lage gehalten wird. Die Halteleiste 31 deckt mit einem horizontalen Befestigungsabschnitt 33 die Rippe R6 ab und ist mit einer ersten Aufnahme 34 für das Seil 32 und einer zweiten Aufnahme 35 für ein Tragelement 36 der Innenverkleidung 30 versehen.

## Patentansprüche

1. Faltverdeck für einen Personenkraftwagen, das mit einer eine Dachkappe (16) aufweisenden Verdeckstruktur versehen ist, welche Dachkappe (16) benachbart einem oberen Querträger (8) eines Windschutzscheibenrahmens eines einen Fahrgastraum umfassenden Aufbaus des Personenkraftwagens angeordnedenbar ist, wobei die Dachkappe (16) sich mit einem flächigen Wandabschnitt im montierten Zustand vom Querträger aus entgegen der Fahrtrichtung erstreckt und für Passagiere im Fahrgastraum mit einer aufschlagenergieabsorbierenden Schutzeinrichtung (20) versehen ist, und wobei die Dachkappe (16) auf der dem Fahrgastraum (13) zugewandten Seite mit von einer Innenseite (19) der Dachkappe (16) weggeführten, in Fahrzeuglängsrichtung (B-B) betrachtet beabstandeten und in Fahrzeugquerrichtung (C-C) verlaufenden Rippen (R1, R2, R3, R4, R5 und R6) versehen ist, die von der Schutzeinrichtung (20) abgedeckt werden, **dadurch gekennzeichnet, dass** die Schutzeinrichtung (20) auf der der Innenseite (19) der Dachkappe (16) zugekehrten Seite (21) mit Ausnehmungen (22, 23, 24 und 25) für die Rippen (R1, R2, R3, R4, R5 und R6) versehen ist.

2. Faltverdeck nach Anspruch 1, **dadurch gekennzeichnet, dass** sich die Schutzeinrichtung (20) über wesentliche Längen (Läl und Läll) der Dachkappe (16) in Fahrzeuglängsrichtung (B-B) und Fahrzeugquerrichtung (C-C) erstreckt.

3. Faltverdeck nach Anspruch 1, **dadurch gekennzeichnet, dass** zumindest eine der Ausnehmungen (z. B. 24) der Schutzeinrichtung (20) zur Aufnahme eines Kabels (26), Leitungsstranges oder dgl. ausgebildet ist.

4. Faltverdeck nach einem oder mehreren der vorangehenden Ansprüche, **dadurch gekennzeichnet, dass** die Schutzeinrichtung (20) in einem -in Fahrtrichtung (A) betrachtetvorderen Bereich (Brv) mit einer Ausnehmung (z. B. 22) eine Rippe (z. B. R1) formschlüssig umgibt.

5. Faltverdeck nach den Ansprüchen 1 und 4, **dadurch gekennzeichnet, dass** die Schutzeinrichtung (20) benachbart der Ausnehmung (22) mit einer konvexen Erweiterung (27) versehen ist, die von einer balligen Kontur (28) begrenzt wird, um welche Kontur (28) eine Innenverkleidung (29) des Fahrgastraums (13) herumgeführt ist.

6. Faltverdeck nach einem oder mehreren der vorangehenden Ansprüche, **dadurch gekennzeichnet, dass** an der Schutzeinrichtung (20) in einem hinteren Bereich (Brh) eine Halteleiste (31) angebracht ist, die z. B. mittels eines Seils (32) in Lage gehalten wird.

7. Faltverdeck nach Anspruch 6, **dadurch gekennzeichnet, dass** die Halteleiste (31) einen horizontalen Befestigungsabschnitt (33) mit einer ersten Aufnahme (34) für das Seil (32) besitzt.

8. Faltverdeck nach Anspruch 1, **dadurch gekennzeichnet, dass** am Befestigungsabschnitt (33) eine zweite Aufnahme (35) für ein Tragelement (34) der Innenverkleidung (29) vorgesehen ist.

9. Faltverdeck nach Anspruch 7, **dadurch gekennzeichnet, dass** die aus einem Kunststoff mit definierten stoßenergieabsorbierenden Eigenschaften bestehende Schutzeinrichtung (20) ein- oder mehrteilig ausgeführt ist.

## Claims

1. Folding top for a passenger car, which folding top is provided with a top structure which has a roof cap (16), which roof cap (16) can be arranged adjacent to an upper crossmember (8) of a windscreen frame of a structure of the passenger car, which structure surrounds a passenger compartment, wherein the roof cap (16), by way of a flat wall section, extends from the crossmember in the opposite direction to the direction of travel in the mounted state and is provided with an impact-energy-absorbing protection device (20) for passengers in the passenger compartment, and wherein the roof cap (16), on the side which faces the passenger compartment (13), is provided with ribs (R1, R2, R3, R4, R5 and R6) which are routed away from an inner side (19) of the roof cap (16), are spaced apart as viewed in the longitudinal direction (B-B) of the vehicle, run in the lateral direction (C-C) of the vehicle and are covered by the protection device (20), **characterized in that** the protection device (20), on that side (21) which faces the inner side (19) of the roof cap (16), is provided with recesses (22, 23, 24 and 25) for the ribs (R1, R2, R3, R4, R5 and R6).

2. Folding top according to Claim 1, **characterized in that** the protection device (20) extends over substantial lengths (LäI and LäII) of the roof cap (16) in the longitudinal direction (B-B) of the vehicle and lateral direction (C-C) of the vehicle.

3. Folding top according to Claim 1, **characterized in that** at least one of the recesses (for example 24) in the protection device (20) is designed to receive a cable (26), line section or the like.

4. Folding top according to one or more of the preceding claims, **characterized in that** the protection device (20) surrounds a rib (for example R1) in an interlocking manner by way of a recess (for example 22) in a region (Brv) which is at the front - as viewed in the direction (A) of travel.

5. Folding top according to Claims 1 and 4, **characterized in that** the protection device (20) is provided with a convex widened portion (27) adjacent to the recess (22), the said convex widened portion being delimited by a spherical contour (28), an internal trim (29) of the passenger compartment (13) being routed around the said contour (28).

6. Folding top according to one or more of the preceding claims, **characterized in that** a retaining strip (31) is fitted to the protection device (20) in a rear region (Brh), the said retaining strip being held in position, for example, by means of a cord (32).

7. Folding top according to Claim 6, **characterized in that** the retaining strip (31) has a horizontal fastening section (33) with a first receptacle (34) for the cord (32).

8. Folding top according to Claim 1, **characterized in that** a second receptacle (35) for a supporting element (34) of the internal trim (29) is provided on the fastening section (33).

9. Folding top according to Claim 7, **characterized in that** the protection device (20), which is composed of a plastic with defined impact-energy-absorbing properties, is of integral or multipartite design.

## Revendications

1. Capote escamotable pour un véhicule automobile, munie d'une structure de capote présentant un recouvrement de toit (16), lequel recouvrement de toit (16) peut être disposé en position adjacente à une traverse supérieure (8) d'un cadre de pare-brise d'une caisse du véhicule automobile comprenant un habitacle de conduite, le recouvrement de toit (16) s'étendant avec une portion de paroi plane dans l'état monté depuis la traverse dans le sens opposé à la direction de conduite et étant pourvu d'un dispositif de protection (20) absorbant l'énergie d'impact pour les passagers dans l'habitacle de conduite, et le recouvrement de toit (16) étant pourvu, du côté tourné vers l'habitacle de conduite (13), de nervures (R1, R2, R3, R4, R5 et R6) guidées à l'écart d'un côté intérieur (19) du recouvrement de toit (16), espacées les unes des autres considéré dans la direction longitudinale du véhicule (B-B) et s'étendant dans la direction transversale du véhicule (C-C), lesquelles nervures sont recouvertes par le dispositif de protection (20), **caractérisée en ce que** le dispositif de protection (20) est pourvu, du côté (21) tourné vers le côté intérieur (19) du recouvrement de toit (16), d'évidements (22, 23, 24 et 25) pour les nervures (R1, R2, R3, R4, R5 et R6).

2. Capote escamotable selon la revendication 1, **caractérisée en ce que** le dispositif de protection (20) s'étend sur des longueurs substantielles (Läl et Läll) du recouvrement de toit (16) dans la direction longitudinale du véhicule (B-B) et dans la direction transversale du véhicule (C-C).

3. Capote escamotable selon la revendication 1, **caractérisée en ce qu'**au moins l'un des évidements (par exemple 24) du dispositif de protection (20) est réalisé pour recevoir un câble (26), une section de conduite ou similaire.

4. Capote escamotable selon l'une quelconque ou plusieurs des revendications précédentes, **caractérisée en ce que** le dispositif de protection (20), dans une région avant (Brv), considérée dans la direction de conduite (A), entoure avec un évidement (par exemple 22) une nervure (par exemple R1) par engagement positif.

5. Capote escamotable selon les revendications 1 et 4, **caractérisée en ce que** le dispositif de protection (20) est pourvu, en position adjacente à l'évidement (22), d'un élargissement convexe (27), qui est limité par un contour bombé (28), autour duquel contour (28) est guidé un habillage intérieur (29) de l'habitacle de conduite (13).

6. Capote escamotable selon l'une ou plusieurs des revendications précédentes, **caractérisée en ce qu'**une baguette de fixation (31) est montée sur le dispositif de protection (20) dans une région arrière (Brh), laquelle baguette de fixation est maintenue en position par exemple au moyen d'un fil métallique (32).

7. Capote escamotable selon la revendication 6, **caractérisée en ce que** la baguette de fixation (31) possède une portion de fixation horizontale (33) avec un premier logement (34) pour le fil métallique (32).

8. Capote escamotable selon la revendication 1, **caractérisée en ce qu'**un deuxième logement (35) pour un élément de support (34) de l'habillage interne (29) est prévu au niveau de la portion de fixation (33).

9. Capote escamotable selon la revendication 7, **caractérisée en ce que** le dispositif de protection (20) constitué d'un plastique ayant des propriétés définies d'absorption de l'énergie d'impact est réalisé en une ou plusieurs pièces.
